# EUROPEAN PATENT SPECIFICATION

(11) **EP 3 815 323 B1**
(45) Date of publication and mention of the grant of the patent: **24.04.2024**
(21) Application number: 18924608.5
(22) Date of filing: 28.06.2018
(51) Int. Cl.: G06F 21/53, G06F 21/60, H04L 9/08, G06F 9/455, H04L 9/40

(54) **SECURE VIRTUAL MACHINE MIGRATION USING ENCRYPTED MEMORY TECHNOLOGIES**
SICHERE MIGRATION EINER VIRTUELLEN MASCHINE UNTER VERWENDUNG VON VERSCHLÜSSELTEN SPEICHERTECHNOLOGIEN
MIGRATION DE MACHINE VIRTUELLE SÉCURISÉE À L'AIDE DE TECHNOLOGIES À MÉMOIRE CHIFFRÉES

(43) Date of publication of application: 05.05.2021
(73) Proprietor: INTEL Corporation, Santa Clara, CA 95054 (US)
(72) Inventor: PATEL, Baiju V., Portland, Oregon 97229 (US); SOOD, Kapil, Portland, Oregon 97229 (US); LI, Weigang, Shanghai 200240 (CN); YU, Ping, Shanghai 200241 (CN); WEI, Changzheng, Shanghai 200241 (CN); WANG, Junyan, Shanghai 200240 (CN); ZENG, Xin, Shanghai 200240 (CN)
(74) Representative: Goddar, Heinz J.
(86) International application number: PCT/CN2018/093232
(87) International publication number: WO 2020/000285

(56) References cited:
- CN-A- 101 897 211
- CN-A- 101 984 631
- CN-A- 103 139 221
- CN-A- 106 462 458
- GB-A- 2 500 219
- US-A1- 2013 191 648
- US-A1- 2017 277 898
- US-B1- 9 712 503
- US-B2- 9 317 326

## Description

### TECHNICAL FIELD

The embodiments of the invention relate generally to computing systems and in particular to virtual machine migration.

US 9 712 503 B1 discloses a virtual machine migration system comprising a memory and a processing device operatively coupled to the memory, to obtain a cryptographic data item utilized to derive a cryptographic key employed by a first memory controller for implementing a first cryptographically protected execution environment for storing memory pages associated with a virtual machine, transmit the cryptographic data item to a second host system via a second secure communication channel for implementing a second cryptographically protected execution environment on the second host system for storing memory pages associated with the virtual machine and cause the first host system to migrate to memory pages of the virtual machine via an unsecured communication channel to the second host system for storing in the second cryptographically protected execution environment.

### SUMMARY OF THE INVENTION

The invention provides a method according to independent claim 1 and a system according to claim 7. Preferred embodiments are defined in the dependent claims.

### BRIEF DESCRIPTION OF THE DRAWINGS

The disclosure will be understood more fully from the detailed description given below and from the accompanying drawings of various embodiments of the invention. The drawings, however, should not be taken to limit the disclosure to the specific embodiments, but are for explanation and understanding only.
**FIG. 1** illustrates a multi-node system, according to one embodiment.
**FIG. 2** illustrates a block diagram of a system of enabling secure virtual machine (VM) migration, according to one embodiment.
**FIG. 3** is a flow diagram of a method of performing a secure migration of a VM from a first host system to a second host system, according to one embodiment.
**FIG. 4** is a flow diagram of another method of performing a secure VM migration from a first host system to a second host system, according to another embodiment.
**FIG. 5** is a flow diagram of another method of a host system placing a VM in a cryptographically protected execution environment and performing a secure migration of the VM, according to another embodiment.
**FIG. 6** is a flow diagram of another method of receiving a cryptographic data item and memory pages associated with a migrated VM, according to another embodiment.
**FIG. 7** illustrates a computing system with multiple interconnects with a mid-speed interface, according to one embodiment.
**FIG. 8** illustrates a system on a chip (SOC) design, according to one embodiment.

### DESCRIPTION OF IMPLEMENTATIONS

Implementations describe techniques for secure virtual machine (VM) migration using encrypted memory technologies. Embodiments of the invention address memory migration of a VM when migrating the VM between a first host system and a second host system. Embodiments of the invention are used to perform migration of encrypted memory pages associated with the VM via an unsecure communication channel.

When a VM is executed by a first host system, the VM may reside in a cryptographically protected execution environment. The cryptographically protected execution environment may be an isolated execution environment on a processing device of the first host system. Code and data associated with the VM may be written and executed in a protected memory region of the cryptographically protected execution environment on the first host system. Code associated with the VM may be executed in the protected execution environment and data associated with the VM that is written to the memory region of the cryptographically protected execution environment is encrypted. For example, the memory controller of the first host system maintains the cryptographically protected execution environment by encrypting memory pages associated with the VM when the memory pages are stored in the memory region of the cryptographically protected execution environment and by decrypting the memory pages when the memory pages are read from the cryptographically protected execution environment.

Each cryptographically protected execution environment is cryptographically isolated in memory using at least one exclusive (e.g., execution environment specific) encryption key for encrypting the memory (holding code and/or data) associated with the cryptographically protected execution environment. The processing device utilizes the encryption engine to encrypt and decrypt memory used during execution of the cryptographically protected execution environment workloads. For example, the encryption engine is used by the cryptographically protected execution environment architecture to utilize one or more keys per VM for encrypting and decrypting memory pages associated with the VM.

One example of encryption utilized by a cryptographically protected execution environment is Total Memory Encryption (TME). Using TME, a processing device of the host system generates a cryptographic key that is used to encrypt and decrypt all data stored at the cryptographically protected execution environment. Another example of a cryptographically protected execution environment is a Multi-Key Total Memory Encryption (MKTME) environment. Using MKTME, the processing device of the host system generates multiple cryptographic keys for the encrypting and decrypting of all data stored at the cryptographically protected execution environment, allowing for page-granular memory encryption. Other examples of memory encryption that may be used in the embodiment of a cryptographically protected execution environment may include, but are not limited to, Trusted Domain Extensions (TDX), Secure Memory Encryption (SME) and Secure Encrypted Virtualization (SEV).

In a conventional system, when a VM is migrated from the first host system to the second host system, memory pages associated with the VM are transmitted from the first host system to the second host system in a decrypted state. However, because the memory pages associated with the VM are transmitted from the first host system to the second host system in a decrypted state, the security of the memory pages may be compromised as the memory pages are transmitted from the first host system to the second host system. For example, the decrypted memory pages may be intercepted by a third party and accessed because the memory pages are not encrypted when the memory pages are transmitted from the first host system to the second host system.

One conventional solution for secure VM migration utilizes secure communication protocols for securing the memory pages using the Internet Protocol (IP) of the host systems. The Internet Protocol Security (IPSec) may be embedded in the IP stack of a host system. Upon establishing a communication channel with a destination host system, a source host system may encrypt the memory pages to be transmitted via the communication channel. Such a conventional solution for secure VM migration may have drawbacks. For example, the embodiment of IPSec may use a large amount of computing resources of the source host system, because the memory pages are first decrypted by the memory controller when the memory pages are read from the cryptographically protected execution environment and then the memory pages are encrypted again by IPSec for secure migration of the memory pages to the second host system. Upon receiving the memory pages, the destination host system may then decrypt the received memory pages and subsequently encrypt the memory pages for storage at a cryptographically protected execution environment of the second host system. This may have negative performance and Quality of Service (QoS) implications.

To avoid these drawbacks, in the embodiments described herein, encrypted memory pages associated with a VM that is to be migrated are transmitted from a first cryptographically protected execution environment of a first host system to a second cryptographically protected execution environment of a second host system. The memory controller of the first host system may not decrypt the memory pages when the memory pages are read from the memory region associated with the cryptographically protected execution environment. Therefore, when the memory pages are transmitted to the second host system via a communication channel, the memory pages will remain in a secure, encrypted state. When the memory pages are received by the second host system, the memory controller of the second host system stores the memory pages in a cryptographically protected execution environment using the same cryptographic key as has been utilized by the first cryptographically protected execution environment of the first host computer system.

A cryptographic data item utilized for deriving the cryptographic key is transmitted from the first host system to a migration manager via a first secure communication channel. The cryptographic data item is transmitted by the migration manager to the second host system via a second secure communication channel. In one embodiment, the first and second secure communication channels may utilize IPSec. Upon receiving the cryptographic data item used to derive the cryptographic key at the first host system, the second host system subsequently encrypts/decrypts the memory pages associated with the VM that are stored at the cryptographically protected execution environment of the second host system. Accordingly, by using secure communication channels for providing the cryptographic data item from the first host system to the second host system, while migrating the encrypted memory pages associated with the VM via an unsecure communication channel, the amount of data being transmitted via the secure communication channels is reduced, resulting in an improvement of system performance and QoS.

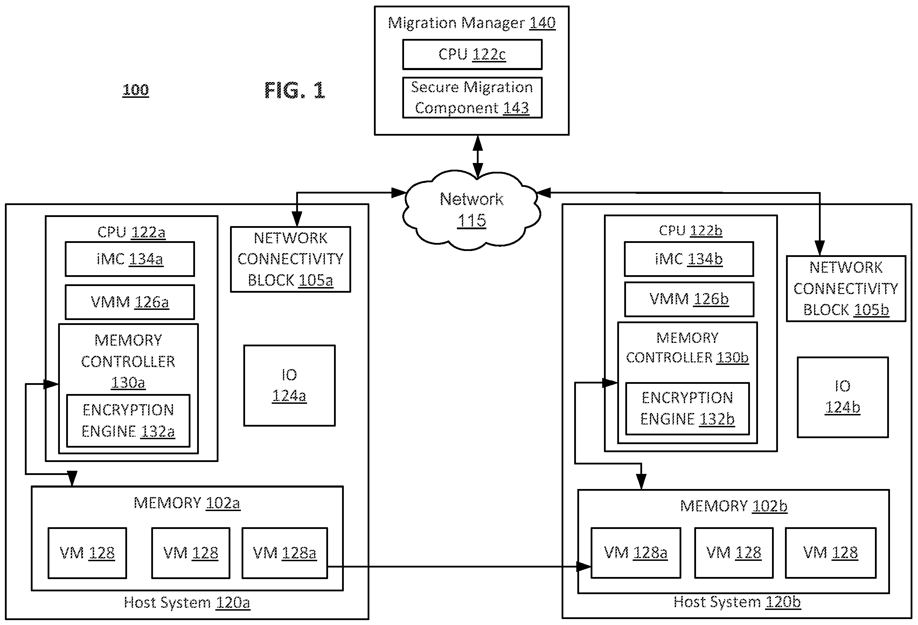

**FIG. 1** illustrates an example virtualized execution environment 100 in which the systems and methods described herein may be implemented. The virtualized execution environment 100 may include two or more host systems 120a, 120b and migration manager 140.

In one embodiment, host systems 120a, 120b may include a corresponding memory 102a, 102b that may be accessed by VMs 128 via a memory controller 130a, 130b. The memory 102a, 102b may include any type of memory or storage technology, such as random access memory (RAM), flash memory, or any other suitable memory systems. For example, memory 102a and/or memory 102b may include dynamic random access memory (DRAM).

The memory 102a, 102b may be a physical memory such as a hard drive, an optical drive, a thumbdrive, an array of drives, or any combinations thereof.

The memory 102a, 102b is accessed through memory controller 130a, 130b. Although one memory controller 130a, 130b is illustrated, the system may have any number of memory controllers 130a, 130b residing on host systems 120a, 120b. The memory controller 130a, 130b may support double data rate (DDR) buses, transactional DDR (DDR-T) buses, and other links/buses that enable connections with various memories that may be included in the memory 102a, 102b, including DRAM and non-volatile DIMM (NVDIMM). In an embodiment, the memory 102a, 102b may also support a different memory hierarchy, such as the two level memory (2LM) by hosting "Far Memory", assuming memory-side caching capability is included in the processor's integrated memory controller (iMC) 134a, 134b on each node.

Additionally, the host systems 120a, 120b may include a network connectivity block 105a, 105b. In some embodiments, the network connectivity block 105a, 105b is a network interface controller (NIC) that may be configured to connect the host systems 120a, 120b and each of the memory controllers 130a, 130b to a network 115. The network 115 may be a wire line network, a wireless network, or a cellular network. The network 115 may be any wide area network (WAN), any local area network (LAN), or the Internet, among others. For example, network 115 may be 3GPP LTE network or a WiFi network. Accordingly, the host systems 120a, 120b are not restricted to one type of connection. Rather, the host systems 120a, 120b may link to various resources using multiple links. In some cases, access to the network 115 provides access to additional memory devices and storage drives, and the memory controllers 130a, 130b may use the network 115 to allocate the additional memory devices and storage drives.

Host systems 120a, 120b and migration manager 140 include a CPU 122a-c that executes stored instructions. The CPU 122a-c may be a single core processor (also referred to as a "processing device"), a multi-core processor, a computing cluster. In some cases, the CPU 122a-c and other components of the host systems 120a, 120b and migration manager 140 may be implemented as a system-on-chip (SoC). Furthermore, the host systems 120a, 120b and migration manager 140 may include more than one CPU 122a-c.

The CPU 122a, 122b are connected (e.g., via a bus) to an I/O interface device 124a, 124b. The I/O interface device 124a, 124b is used to connect the host systems 120a, 120b to one or more I/O devices (not shown). The I/O devices may include, but are not limited to, a keyboard and a pointing device, where the pointing device may include a touchpad or other touchscreen, among others. The I/O devices may be built-in components of the host systems 120a, 120b or may be devices that are externally connected to the host systems 120a, 120b. The host systems 120a, 120b may include any number of additional components not shown in **FIG. 1****,** depending on the details of the specific embodiment. Moreover, the host systems 120a, 120b may include fewer components that those illustrated in **FIG. 1****.**

In one embodiment, the CPU 122a, 122b executes a virtualization system that manages the hardware resources of host system 120a, 120b to allow multiple instances of one or more operating systems to execute on host systems 120a, 120b. The virtualization system may be implemented in hardware (also known as hardware-assisted virtualization). The instruction set of CPU 122a, 122b is extended to include instructions to launch VMs 128 so that the virtualization system of the host systems 120a, 120b is implemented in a hardware-assisted fashion. In hardware-assisted virtualization, a software module known as a virtual machine manager (VMM) 126a, 126b, also referred to as a hypervisor, is used to create and manage one or more VMs 128 (also referred to as guest machines). The VMM 126a, 126b presents each VM 128 with a guest operating system and manage the execution of the guest operating system. Application software (also referred to as guest software) is executed on the VMs 128. Thus, multiple instances of application software may be executed on VMs 128 by sharing the hardware resources of the host systems 120a, 120b through the virtualization system provided by the host systems 120a, 120b.

The VMM 126a, 126b may run directly on the host systems' 120a, 120b hardware by controlling hardware components of host systems 120a, 120b and manage guest operating systems of VMs 128. This is commonly referred to as a type-I VMM. Alternatively, VMM 126a, 126b may run within the operating system (also referred to as host operating system) of host systems 120a, 120b. This is commonly referred to as a type-II VMM. Under either type of VMM 126a, 126b, instructions of guest operating system and guest application software executed on VMs 128.

In some embodiments, a VM 128 is migrated from one host system 120a (a source host system) to another host system 120b (a destination host system). The migration of a VM 128 may occur for a variety of reasons including, for example, load balancing. In some embodiments, a VM 128 may be live migrated from the source host system 120a to the destination host system 120b. A live migration of a VM 128 refers to the process of moving a running VM 128 between host systems without disconnecting a client (user of the VM) from the VM 128 session. As part of a VM 128 migration (live or otherwise), memory, storage, and network connectivity of the VM 128 are transferred from the source host system to the destination host system.

Embodiments of the invention address secure memory migration of a VM 128 when migrating the VM 128 between host systems 120a, 120b. More specifically, embodiments of the invention include a memory controller to transmit encrypted memory pages associated with the VM 128 from host system 120a to host system 120b via an unsecured channel. Providing the memory page from host system 120a to the host system 120b includes reading the memory pages from the memory of host system 120a and transmitting the memory pages via the unsecured channel to host system 120b. A cryptographic data item that is utilized to derive a cryptographic key is transmitted from host system 120a to host system 120b via secure communication channels. In one embodiment, the cryptographic data item may include keying material received from an external source that may be combined with a locally stored cryptographic key. Embodiments of the invention may also be used to migrate memory for purposes other than virtualization, such as moving data sets from one host system 120a to another host system 120b.

In embodiments, VMs 128 resides in a cryptographically protected execution environment in which an encryption engine 132a, 132b of the memory controller 130a, 130b encrypts and decrypts memory pages associated with VMs 128. With total memory encryption (TME), any memory accesses by software executing on the host system 120a, 120b are encrypted in memory with an encryption key. Multi-Key Total Memory Encryption (MKTME) is an enhancement to TME that allows use of multiple encryption keys for different memory pages of VMs 128 (the number of supported keys is embodiment dependent). The CPU 122a, 122b utilizes the encryption engine 132a, 132b to cause different memory pages to be encrypted using different MKTME keys. The encryption engine 132a, 132b of memory controller 130a, 130b may be utilized in the cryptographically protected execution environment described herein to support one or more encryption keys per each cryptographically protected execution environment to help achieve the cryptographic isolation between different VM workloads.

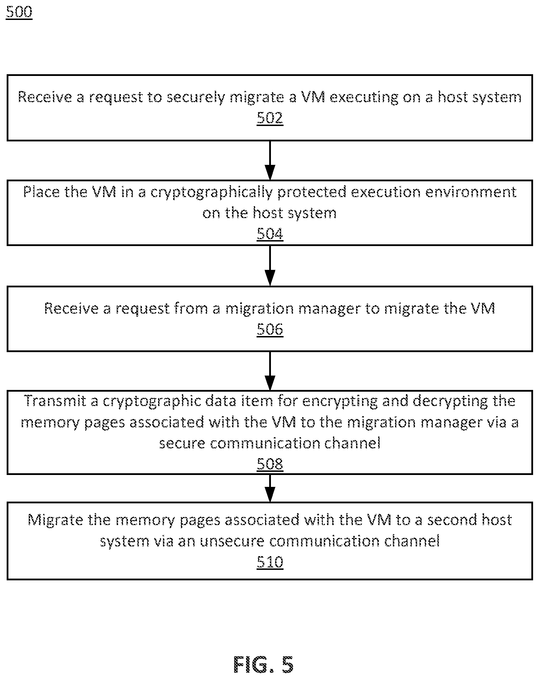

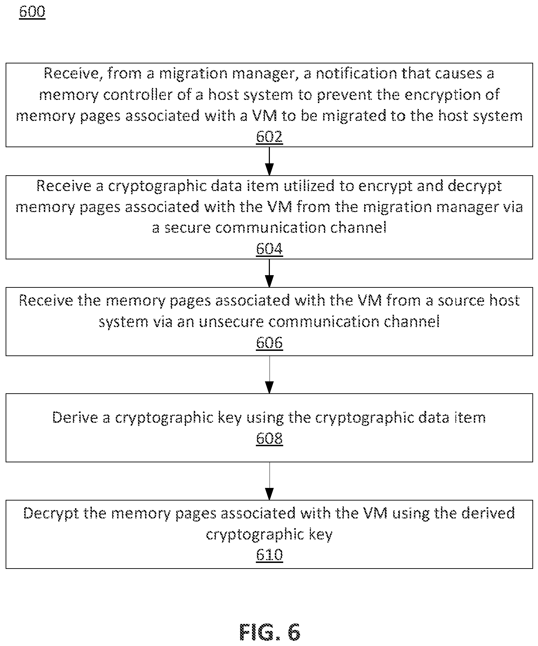

The migration manager 140 may be hosted by a computer system (described in more detail below with reference to **FIGs. 5** and **6**) and include one or more programs executed by the computer system for management of the virtualized execution environment 100. In one embodiment, the migration manager 140 may include various interfaces, including an administrative interface, a reporting interface, and/or an application programming interface (API) to communicate with host systems 120a and 120b of virtualized execution environment 100.

Migration manager 140 may include secure VM migration functionality that migrates an active VM from one host system to another host system. In one example, migration manager 140 may include a secure migration component 143. The secure migration component 143 may be implemented by hardware (e.g., circuitry, dedicated logic, programmable logic, microcode, etc.), software (such as instructions run on a processor, a general purpose computer system, or a dedicated machine), firmware, microcode, or a combination thereof. The secure migration component 143 receives a request from a host system to migrate a VM to another host system. The secure migration component 143 receives a cryptographic data item that includes a cryptographic key from the host system via a first secure communication channel. The secure migration component 143 further transmits the cryptographic data item including the cryptographic key to the other host system via a second secure communication channel. Further details regarding the secure migration component 143, as well as corresponding functions, are described below.

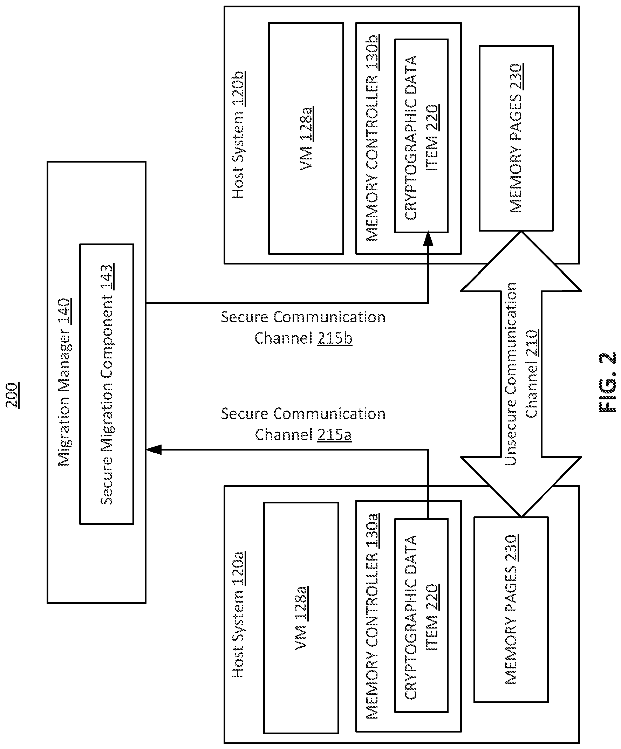

**FIG. 2** illustrates a block diagram of a system 200 of enabling secure VM migration, according to one embodiment. System 200 includes secure communication channel 215a between host system 120a and migration manager 140, secure communication channel 215b between host system 120b and migration manager 140 and unsecure communication channel 210 between host systems 120a and 120b. The secure communication channels 215a, 215b of system 200 represent an abstraction of a communication channel between host systems 120 and migration manager 140 rather than a component of system 200. The migration manager 140 includes a secure migration component 143 described with respect to **FIG. 1****.** In one embodiment, a VM, such as VM 128a described with respect to **FIG. 1****,** is migrated from host system 120a utilizing memory managed by the source memory controller 130a to host system 120b utilizing memory managed by the destination memory controller 130b. VM 128a is migrated from host system 120a to host system 120b by migrating memory pages 230 associated with VM 128a from host system 120a to host system 120b.

As discussed above, VM 128a and memory pages 230 associated with VM 128a resides in a cryptographically protected execution environment on host system 120a. Memory controller 130a derives a cryptographic key using cryptographic data item 220 for implementing the cryptographically protected execution environment. The cryptographic key is used to encrypt memory pages 230 associated with VM 128a as the memory pages 230 are stored at the memory (e.g., memory 102a of **FIG. 1**) of host system 120a. Similarly, the cryptographic key is used to decrypt memory pages 230 as the memory pages 230 are read from the memory of host system 120a.

Memory pages 230 residing in the cryptographically protected execution environment are securely migrated from host system 120a to host system 120b via unsecure communication channel 210. To securely migrate memory pages 230, memory controller 130a reads memory pages 230 from the memory region of the cryptographically protected execution environment without decrypting the memory pages 230 during a secure migration of VM 128a. In one embodiment, memory controller 130a receives a notification from migration manager 140. The notification indicates to memory controller 130a that memory pages 230 associated with VM 128a are to be securely migrated to a destination host system. The notification causes memory controller 130a to prevent the decryption of memory pages 230 when memory pages 230 are read from the memory region associated with the cryptographically protected execution environment. In embodiments, the notification may cause a flag bit in the physical address of memory pages 230 to indicate that memory pages 230 are not to be decrypted. For example, the flag bit in the physical address of a memory page may be set to a value of 0 to indicate that the memory page is not to be decrypted by memory controller 130a. Memory controller 130a, 130b includes hardware to support the identification of the flag bit in the physical address of a memory page and perform an action (e.g., not encrypting/decrypting the memory page) based on the identified flag bit. This results in encrypted memory pages 230 being securely migrated from host system 120a to host system 120b via unsecure communication channel 210. The memory pages 230 associated with VM 128a may reside in another cryptographically protected execution environment at host system 120b using the same cryptographic key as has been utilized by the first cryptographically protected execution environment on host system 120a.

A cryptographic data item 220 is transmitted from the host system 120a to host system 120b to allow memory controller 130a of host system 120b to decrypt the encrypted memory pages 230 that have been migrated to host system 120b via unsecure communication channel 210. The cryptographic data item 220 may be used to derive the cryptographic key to be used by the cryptographically protected execution environment in which the received memory pages will be stored. In one embodiment, the host system 120b may produce the cryptographic key by applying a pre-defined transformation to the cryptographic data item 220 (e.g., padding bits to the cryptographic data item 220, removing certain bits from the cryptographic data item 220, applying a cryptographic function to the cryptographic data item 220, etc. ). In another embodiment, the host system 120b may produce the cryptographic key by combining the cryptographic data item 220 with a locally generated second cryptographic data item. In another embodiment, the host system 120b may produce the cryptographic key by combining the cryptographic data item 220 with a locally generated second cryptographic data item and then applying a pre-defined transformation to the combination of the two cryptographic data items. In another embodiment, the host system 120b may utilize the cryptographic data item 220 as the cryptographic key.

In one embodiment, the cryptographic data item 220 may include physical address information of memory pages 230, which is used to derive a cryptographic key. The physical address information may include a key identifier (KeyID) associated with the cryptographic key, where the KeyID may be transmitted to the encryption engine of memory controller 130a of a host system 120a. The KeyID is an index to a table maintained by memory controller 130a that locally stores one or more cryptographic keys and each cryptographic key's associated encryption mode. The memory controller 130a uses the KeyID to identify a locally stored cryptographic key and associated encryption mode in the index table and combine the locally stored cryptographic key with the cryptographic data item 220 to derive a cryptographic key. The memory pages 230 and cryptographic key may be encrypted and derived using various methods. Examples may include, but are not limited to TME, MKTME, TDX, SME and SEV.

Cryptographic data item 220 is transmitted from host system 120a to migration manager 140 via secure communication channel 215a. In one embodiment, the secure communication channel 215a, 215b may be a communication channel established between host system 120a and migration manager 140 that utilizes IPSec, as previously described. The cryptographic data item 220 is encrypted by memory controller 130a of host system 120a. In one embodiment, a cryptographic hash of the cryptographic data item 220 may be computed to validate the authenticity of the cryptographic data item 220. The encrypted cryptographic data item 220 and the cryptographic hash are transmitted to the migration manager 140 via secure communication channel 215a. Upon receipt of the encrypted cryptographic data item 220 and the cryptographic hash, the migration manager 140 validates the cryptographic data item 220 using the cryptographic hash.

The migration manager 140 then encrypts the cryptographic data item 220 to transmit to host system 120b with the cryptographic hash via secure communication channel 215b. Upon receipt of the encrypted cryptographic data item 220 and the other cryptographic hash, memory controller 130b of host system 120b validates the authenticity of the cryptographic data item 220 using the other cryptographic hash. Host system 120b may then utilize the cryptographic data item to derive a cryptographic key for implementing a cryptographically protected execution environment on host system 120b, where memory pages 230 of VM 128a are encrypted and decrypted using the cryptographic key. Although the previous illustration describes the use of a cryptographic data item to derive a single cryptographic key, in other embodiments any number of cryptographic keys may be derived from the cryptographic data item.

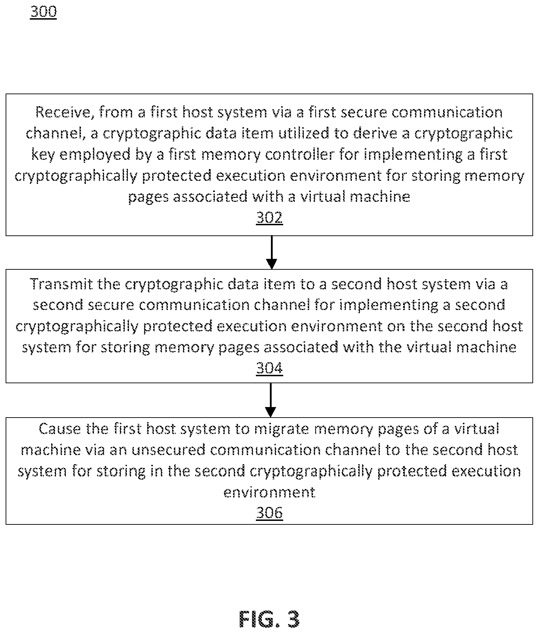

**FIG. 3** is a flow diagram of a method 300 of performing a secure migration of a VM from a first host system to a second host system according to another embodiment. Method 300 may be performed by processing logic that may include hardware (e.g., circuitry, dedicated logic, programmable logic, microcode, etc.), software (such as instructions run on a processor, a general purpose computer system, or a dedicated machine), firmware, microcode, or a combination thereof. In one embodiment, method 300 may be performed, in part, by processing logic implemented in secure migration component 143 of **FIGS. 1** **and** **2****.**

For simplicity of explanation, the method 300 is depicted and described as a series of acts. However, acts in accordance with this disclosure may occur in various orders and/or concurrently and with other acts not presented and described herein. Furthermore, not all illustrated acts may be performed to implement the method 300 in accordance with the disclosed subject matter. In addition, those skilled in the art will understand and appreciate that the method 300 could alternatively be represented as a series of interrelated states via a state diagram or events.

Referring to **FIG. 3****,** at block 302, the processing logic receives a cryptographic data item utilized to derive a cryptographic key from a first host system via a first secure communication channel (e.g., secure communication channel 215a of **FIG. 2**)**.** The cryptographic data item may be utilized to derive a cryptographic key employed by a cryptographically protected execution environment on the first host system. A VM executed by the first host system that is to be migrated to a second host system resides in the cryptographically protected execution environment. A memory controller of the first host system encrypts memory pages associated with the virtual machine when the memory pages are stored at a memory region associated with the cryptographically protected execution environment. Similarly, the memory controller decrypts the memory pages associated with the virtual machine when the memory pages are read from the memory region associated with the cryptographically protected execution environment. In one embodiment, the cryptographic data item may include key materials utilized to derive the cryptographic key, such as physical address information associated with memory pages of the VM.

At block 304, the processing logic transmits the received cryptographic data item to a second host system via a second secure communication channel (e.g., secure communication channel 215b of **FIG. 2**)**.** The cryptographic data item may be employed by a second cryptographically protected execution environment on the second host system in which the VM, once migrated, may reside in. The second cryptographically protected execution environment uses the same cryptographic key as has been utilized by the first cryptographically protected execution environment of the first host system.

At block 306, the processing logic causes the first host system to migrate memory pages of a VM residing in the cryptographically protected execution environment to the second host system via an unsecured channel (e.g., unsecure communication channel 210 of **FIG. 2**)**.** The memory pages of the VM may be stored in the second cryptographically protected execution environment on the second host system. Prior to the migration of the VM from the first host system to the second host system, the VMM of the first host system may pause the execution of the VM by the first host system. The VMM of the second host system may resume the execution of the VM upon migration of the VM to the second host system.

In embodiments, the processing logic may cause the migration of the VM from the first host system to the second host system in response to receiving a request from the VMM of the first host system to migrate the VM. In an embodiment, the VMM may transmit the request to migrate the VM to the migration manager in response to receiving a request from a user of the VM to migrate the VM to another host system. In some embodiments, the VMM may transmit the request to migrate the VM to another host system in response to a shortage of computing resources available to execute the VM on the first host system. In embodiments, the VMM may transmit the request to migrate the VM to another host system in response to detecting a failure of hardware of the first host system.

In embodiments, a VM executed by the first host system may be placed into the cryptographically protected execution environment to facilitate a secure migration of the VM. For example, a VM executed by the first host system may be running unprotected. Upon determining the VM running unprotected is to be migrated to the second host system, the VM may be placed in a cryptographically protected execution environment by a VMM executing on the first host system. Subsequently, the memory pages associated with the VM may be migrated to the cryptographically protected execution environment on the second host system, as previously described. In one embodiment, the VM may remain in the cryptographically protected execution environment on the second host system after migration. In embodiments, the VM may be removed from the cryptographically protected execution environment on the second host system after migration.

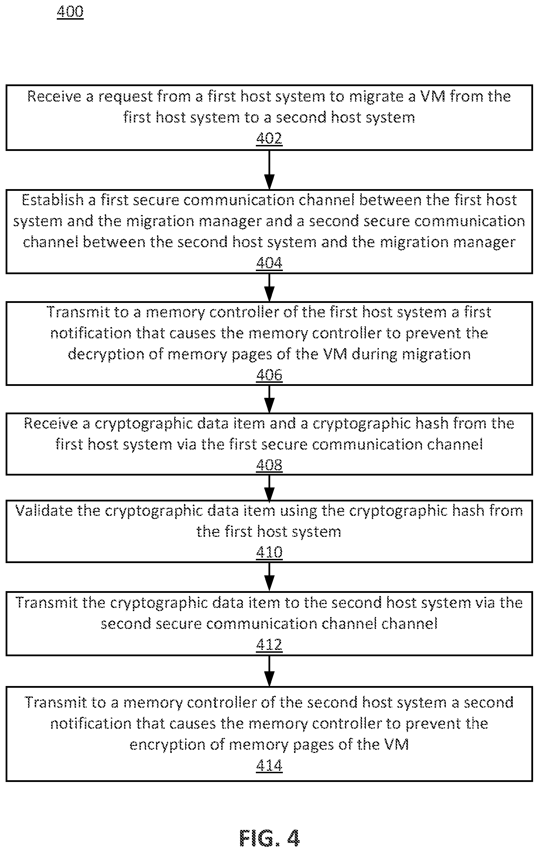

**FIG. 4** is a flow diagram of method 400 of performing a secure VM migration from a first host system to a second host system, according to another embodiment. Method 400 may be performed by processing logic that may include hardware (e.g., circuitry, dedicated logic, programmable logic, microcode, etc.), software (such as instructions run on a processor, a general purpose computer system, or a dedicated machine), firmware, microcode, or a combination thereof. In one embodiment, method 400 may be performed, in part, by processing logic implemented in migration manager 140 of **FIGS. 1** **and** **2****.**

For simplicity of explanation, the method 400 is depicted and described as a series of acts. However, acts in accordance with this disclosure may occur in various orders and/or concurrently and with other acts not presented and described herein. Furthermore, not all illustrated acts may be performed to implement the method 400 in accordance with the disclosed subject matter. In addition, those skilled in the art will understand and appreciate that the method 400 could alternatively be represented as a series of interrelated states via a state diagram or events.

Referring to **FIG. 4****,** at block 402, the migration manager receives a request to migrate a VM from the first host system to a second host system.

At block 404, the migration manager establishes a first secure communication channel to the first host system and a second secure communication channel to the second host system.

At block 406, the migration manager transmits to a memory controller of the first host system a first notification that identifies the VM to be migrated. The notification causes the memory controller of the first host system to prevent the decryption of memory pages of the VM during migration. As previously discussed, because the VM resides in a cryptographically protected execution environment on the first host system, the memory controller of the first host system would normally decrypt the memory pages of the VM as the memory pages are read from the memory of the first host system. Therefore, to prevent the memory controller from decrypting the memory pages stored in the cryptographically protected execution environment, the processing logic transmits a notification that causes the memory controller to prevent the decryption of the memory pages of the VM by the memory controller during migration.

At block 408, the migration manager receives a cryptographic data item and a cryptographic hash from the first host system via the first secure communication channel.

At block 410, the migration manager validates the cryptographic data item using the cryptographic hash received from the first host system at block 408.

At block 412, the migration manager transmits the cryptographic data item to the second host system via the second secure communication channel. The second host system may use the received cryptographic data item to derive a cryptographic key for decryption of the memory pages associated with the VM.

At block 414, the migration manager transmits to a memory controller of the second host system a second notification that causes the memory controller of the second host system to avoid encryption of the received memory pages when storing them in the cryptographically protected execution environment. Absent such a notification, the memory controller would encrypt any data item being stored in the cryptographically protected execution environment.

**FIG. 5** is a flow diagram of method 500 of a host system placing a VM in a cryptographically protected execution environment and performing a secure migration of the VM, according to another embodiment. Method 500 may be performed by processing logic that may include hardware (e.g., circuitry, dedicated logic, programmable logic, microcode, etc.), software (such as instructions run on a processor, a general purpose computer system, or a dedicated machine), firmware, microcode, or a combination thereof. In one embodiment, method 500 may be performed, in part, by processing logic implemented in VMM 122a of **FIGS. 1** **and** **2****.**

For simplicity of explanation, the method 500 is depicted and described as a series of acts. However, acts in accordance with this disclosure may occur in various orders and/or concurrently and with other acts not presented and described herein. Furthermore, not all illustrated acts may be performed to implement the method 500 in accordance with the disclosed subject matter. In addition, those skilled in the art will understand and appreciate that the method 500 could alternatively be represented as a series of interrelated states via a state diagram or events.

At block 502, a VMM on a host system receives, from a migration manager, a request to securely migrate a VM executing on the host system. In embodiments, the request may include a notification that causes a memory controller of the host system to prevent the decryption of memory pages of the VM during migration.

At block 504, upon receiving the request to securely migrate the VM, the VMM of the host system places the VM in a cryptographically protected execution environment on the host system. While residing in the cryptographically protected execution environment, memory pages associated with the VM are encrypted when they are stored in the memory of the host system and decrypted when the memory pages are retrieved from the memory.

At block 506, the VMM receives a request from a migration manager to migrate the VM to a destination host system.

At block 508, the VMM transmits a cryptographic data item to the migration manager via a secure communication channel. The cryptographic data item is utilized to derive a cryptographic key for encrypting and decrypting memory pages of the VM residing in the cryptographically protected execution environment on the host system.

At block 510, the VMM migrates the memory pages associated with the VM to a second host system via an unsecure communication channel.

**FIG. 6** is a flow diagram of method 600 of receiving a cryptographic data item and memory pages associated with a migrated VM, according to another embodiment. Method 600 may be performed by processing logic that may include hardware (e.g., circuitry, dedicated logic, programmable logic, microcode, etc.), software (such as instructions run on a processor, a general purpose computer system, or a dedicated machine), firmware, microcode, or a combination thereof. In one embodiment, method 600 may be performed, in part, by processing logic implemented in VMM 122b of **FIGS. 1** **and** **2****.**

For simplicity of explanation, the method 600 is depicted and described as a series of acts. However, acts in accordance with this disclosure may occur in various orders and/or concurrently and with other acts not presented and described herein. Furthermore, not all illustrated acts may be performed to implement the method 600 in accordance with the disclosed subject matter. In addition, those skilled in the art will understand and appreciate that the method 600 could alternatively be represented as a series of interrelated states via a state diagram or events.

At block 602, a VMM receives a notification from a migration manager. The received notification causes a memory controller of the host system to prevent the encryption of VM memory pages associated with a VM that are to be received by the host system.

At block 604, the VMM receives a cryptographic data item utilized to derive a cryptographic key to encrypt and decrypt the memory pages associated with the VM from the migration manager via a secure communication channel.

At block 606, the VMM receives the memory pages associated with the VM from a source host system via an unsecure communication channel.

At block 608, the memory controller of the host system derives a cryptographic key using the cryptographic data item received at block 604.

At block 610, the memory controller of the host system decrypts the memory pages associated with the VM using the cryptographic key derived at block 608.

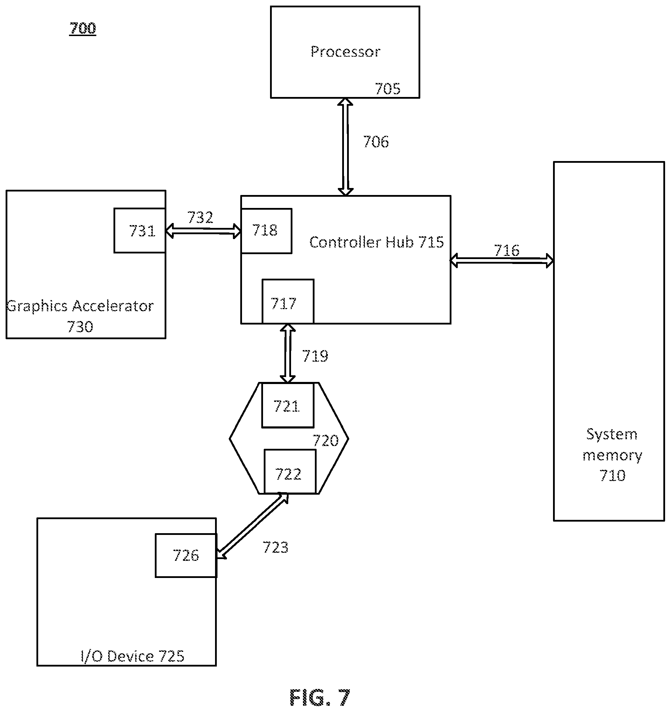

Referring to **FIG. 7****,** an embodiment of a computer system 700 with multiple interconnects with a mid-speed interface is illustrated. System 700 includes processor 705 and system memory 710 coupled to controller hub 715. Processor 705 includes any processing element, such as a microprocessor, a host processor, an embedded processor, a coprocessor, or other processor. Processor 705 is coupled to controller hub 715 by an interface 706 (e.g., front-side bus (FSB), and so forth). In one embodiment, interface 706 is a serial point-to-point interconnect as described below. In another embodiment, interface 706 includes a serial, differential interconnect architecture that is compliant with different interconnect standard.

System memory 710 includes any memory device, such as random access memory (RAM), non-volatile (NV) memory, or other memory accessible by devices in system 700. In one embodiment, processor 705 interfaces directly to system memory 710. In another embodiment, processor 705 is coupled to system memory 710 through controller hub 715. System memory 710 may be coupled to controller hub 715 through memory interface 716. Examples of a memory interface include a double-data rate (DDR) memory interface, a dual-channel DDR memory interface, and a dynamic RAM (DRAM) memory interface.

In one embodiment, controller hub 715 is a root hub, root complex, or root controller in an interconnection hierarchy. Examples of controller hub 715 include a chipset, a memory controller hub (MCH), a northbridge, an interconnect controller hub (ICH) a southbridge, and a root controller/hub. Often the term chipset refers to two physically separate controller hubs, i.e. a memory controller hub (MCH) coupled to an interconnect controller hub (ICH). Note that current systems often include the MCH integrated with processor 705, while controller 715 is to communicate with I/O devices, in a similar manner as described below. In some embodiments, peer-to-peer routing is optionally supported through root complex 715.

Here, controller hub 715 is coupled to switch/bridge 720 through serial link 719. Input/output modules 717 and 721, which may also be referred to as interfaces/ports 717 and 721, include/implement a layered protocol stack to provide communication between controller hub 715 and switch 720. In one embodiment, multiple devices are capable of being coupled to switch 720.

Switch/bridge 720 routes packets/messages from device 725 upstream, i.e. up a hierarchy towards a root complex, to controller hub 715 and downstream, i.e. down a hierarchy away from a root controller, from processor 705 or system memory 710 to device 725. Switch 720, in one embodiment, is referred to as a logical assembly of multiple virtual bridge devices. Device 725 includes any internal or external device or component to be coupled to an electronic system, such as an I/O device, a Network Interface Controller (NIC), an add-in card, an audio processor, a network processor, a hard-drive, a storage device, a CD/DVD ROM, a monitor, a printer, a mouse, a keyboard, a router, a portable storage device, a Firewire device, a Universal Serial Bus (USB) device, a scanner, a camera, an RF component, and other input/output devices. Such a device may be referred to as an endpoint. Although not specifically shown, device 725 may include a bridge to support other devices.

Graphics accelerator 730 is also coupled to controller hub 715 through serial link 732. In one embodiment, graphics accelerator 730 is coupled to an MCH, which is coupled to an ICH. Switch 720, and accordingly I/O device 725, is then coupled to the ICH. I/O modules 731 and 718 are also to implement a layered protocol stack to communicate between graphics accelerator 730 and controller hub 715. Similar to the MCH discussion above, a graphics controller or the graphics accelerator 730 may be integrated in processor 705.

I/O device 725 includes an interface 726 and switch/bridge 720 includes an interface 722. Interface 726 is coupled to interface 722 via serial link 723. Interface 722 may send a first plurality of packets at a clock rate to interface 726, interface 722 may send a speed-switch packet to interface 726, and interface 722 may send a second plurality of packets to interface 726 at a PLL rate.

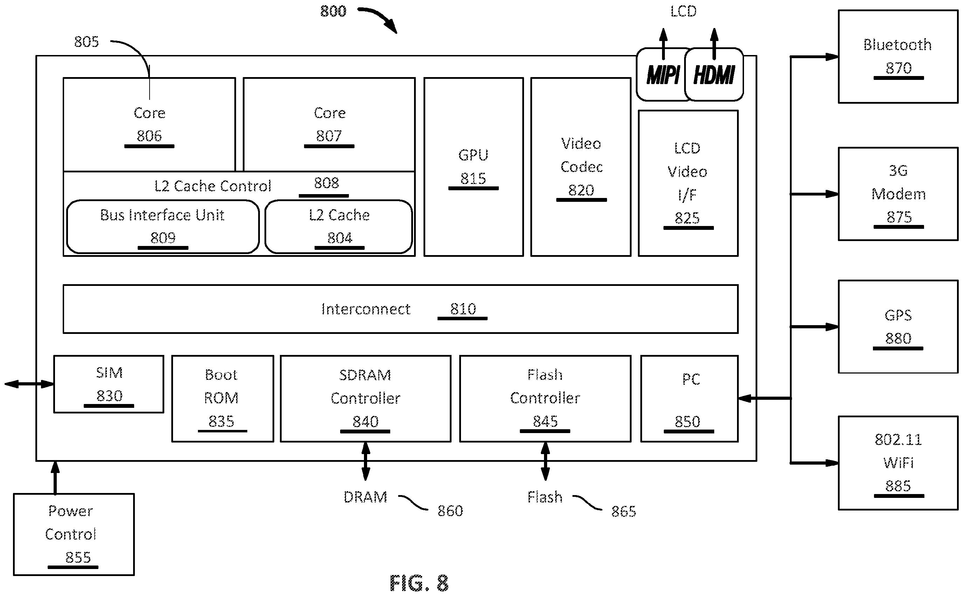

Turning next to **FIG. 8****,** an embodiment of a system on-chip (SOC) design in accordance with the disclosures is depicted. As a specific illustrative example, SOC 800 is included in user equipment (UE). In one embodiment, UE refers to any device to be used by an end-user to communicate, such as a hand-held phone, smartphone, tablet, ultra-thin notebook, notebook with broadband adapter, or any other similar communication device. Often a UE connects to a base station or node, which potentially corresponds in nature to a mobile station (MS) in a GSM network.

Here, SOC 800 includes 2 cores-806 and 807. Similar to the discussion above, cores 806 and 807 may conform to an Instruction Set Architecture, such as an Intel^{®} Architecture Core^{™}-based processor, an Advanced Micro Devices, Inc. (AMD) processor, a MIPS-based processor, an ARM-based processor design, or a customer thereof, as well as their licensees or adopters. Cores 806 and 807 are coupled to cache control 808 that is associated with bus interface unit 809 and L2 cache 804 to communicate with other parts of system 800. Interconnect 810 includes an on-chip interconnect, such as an IOSF, AMBA, or other interconnect discussed above, which potentially implements one or more aspects of the described disclosure.

Interface 810 provides communication channels to the other components, such as a Subscriber Identity Module (SIM) 830 to interface with a SIM card, a boot ROM 835 to hold boot code for execution by cores 806 and 807 to initialize and boot SOC 800, a SDRAM controller 840 to interface with external memory (e.g. DRAM 860), a flash controller 845 to interface with non-volatile memory (e.g. Flash 865), a peripheral control Q1650 (e.g. Serial Peripheral Interface) to interface with peripherals, video codecs 820 and Video interface 825 to display and receive input (e.g. touch enabled input), GPU 815 to perform graphics related computations, etc. Any of these interfaces may incorporate aspects of the disclosure described herein.

Interconnect 810 may connect with another component via a mid-speed interface 115 (e.g., on-chip interconnect, IOSF, AMBA, or other interconnect).

In addition, the system illustrates peripherals for communication, such as a Bluetooth^{®} module 870, 3G modem 875, GPS 880, and Wi-Fi^{®} 885. Note as stated above, a UE includes a radio for communication. As a result, these peripheral communication modules are not all required. However, in a UE some form a radio for external communication is to be included.

Various embodiments may have different combinations of the structural features described above. For instance, all optional features of the methods described above may also be implemented for various usages in SOC applications and may be implemented with respect to an interface described herein and specifics in the examples may be used anywhere in one or more embodiments.

While the present disclosure has been described with respect to a limited number of embodiments, those skilled in the art will appreciate numerous modifications and variations therefrom. It is intended that the appended claims cover all such modifications and variations as fall within the true spirit and scope of this present disclosure.

In the description herein, numerous specific details are set forth, such as examples of specific types of processors and system configurations, specific hardware structures, specific architectural and micro architectural details, specific register configurations, specific instruction types, specific system components, specific measurements/heights, specific processor pipeline stages and operation, etc. in order to provide a thorough understanding of the present disclosure. It will be apparent, however, to one skilled in the art that these specific details need not be employed to practice the present disclosure. In other instances, well known components or methods, such as specific and alternative processor architectures, specific logic circuits/code for described algorithms, specific firmware code, specific interconnect operation, specific logic configurations, specific manufacturing techniques and materials, specific compiler embodiments, specific expression of algorithms in code, specific power down and gating techniques/logic and other specific operational details of computer system have not been described in detail in order to avoid unnecessarily obscuring the present disclosure.

The embodiments may be described with reference to timestamp validation of components in solid-state memory devices in specific integrated circuits, such as in computing platforms or microprocessors. The embodiments may also be applicable to other types of integrated circuits and programmable logic devices. For example, the disclosed embodiments are not limited to desktop computer systems or portable computers, such as the Intel^{®} Ultrabooks^{™} computers, and may be also used in other devices, such as handheld devices, tablets, other thin notebooks, systems on a chip (SoC) devices, and embedded applications. Some examples of handheld devices include cellular phones, Internet protocol devices, digital cameras, personal digital assistants (PDAs), and handheld PCs. Embedded applications typically include a microcontroller, a digital signal processor (DSP), a system on a chip, network computers (NetPC), set-top boxes, network hubs, wide area network (WAN) switches, or any other system that may perform the functions and operations taught below. It is described that the system may be any kind of computer or embedded system. The disclosed embodiments may especially be used for low-end devices, like wearable devices (e.g., watches), electronic implants, sensory and control infrastructure devices, controllers, supervisory control and data acquisition (SCADA) systems, or the like. Moreover, the apparatuses, methods, and systems described herein are not limited to physical computing devices, but may also relate to software optimizations for energy conservation and efficiency. As will become readily apparent in the description below, the embodiments of methods, apparatuses, and systems described herein (whether in reference to hardware, firmware, software, or a combination thereof) are vital to a `green technology' future balanced with performance considerations.

Although the embodiments herein are described with reference to a processor, other embodiments are applicable to other types of integrated circuits and logic devices. Similar techniques and teachings of s of the present disclosure may be applied to other types of circuits or semiconductor devices that may benefit from higher pipeline throughput and improved performance. The teachings of embodiments of the invention are applicable to any processor or machine that performs data manipulations. However, the present disclosure is not limited to processors or machines that perform 512 bit, 256 bit, 128 bit, 64 bit, 32 bit, or 16 bit data operations and may be applied to any processor and machine in which manipulation or management of data is performed. In addition, the description herein provides examples, and the accompanying drawings show various examples for the purposes of illustration. However, these examples should not be construed in a limiting sense as they are merely intended to provide examples of embodiments of the invention rather than to provide an exhaustive list of all possible implementations of embodiments of the invention.

Although the below examples describe instruction handling and distribution in the context of execution units and logic circuits, other embodiments of the invention may be accomplished by way of a data or instructions stored on a machine-readable, tangible medium, which when performed by a machine cause the machine to perform functions consistent with at least one embodiment of the invention. In one embodiment, functions associated with embodiments of the invention are embodied in machine-executable instructions. The instructions may be used to cause a general-purpose or special-purpose processor that is programmed with the instructions to perform the steps of the present disclosure. Embodiments of the invention may be provided as a computer program product or software which may include a machine or computer-readable medium having stored thereon instructions which may be used to program a computer (or other electronic devices) to perform one or more operations according to embodiments of the invention. Alternatively, operations of embodiments of the invention might be performed by specific hardware components that contain fixed-function logic for performing the operations, or by any combination of programmed computer components and fixed-function hardware components.

Instructions used to program logic to perform embodiments of the invention may be stored within a memory in the system, such as DRAM, cache, flash memory, or other storage. Furthermore, the instructions may be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer).

A design may go through various stages, from creation to simulation to fabrication. Data representing a design may represent the design in a number of manners. First, as is useful in simulations, the hardware may be represented using a hardware description language or another functional description language. Additionally, a circuit level model with logic and/or transistor gates may be produced at some stages of the design process. Furthermore, most designs, at some stage, reach a level of data representing the physical placement of various devices in the hardware model. In the case where conventional semiconductor fabrication techniques are used, the data representing the hardware model may be the data specifying the presence or absence of various features on different mask layers for masks used to produce the integrated circuit. In any representation of the design, the data may be stored in any form of a machine readable medium. A memory or a magnetic or optical storage such as a disc may be the machine readable medium to store information transmitted via optical or electrical wave modulated or otherwise generated to transmit such information. When an electrical carrier wave indicating or carrying the code or design is transmitted, to the extent that copying, buffering, or re-transmission of the electrical signal is performed, a new copy is made. Thus, a communication provider or a network provider may store on a tangible, machine-readable medium, at least temporarily, an article, such as information encoded into a carrier wave, embodying techniques of embodiments of the invention.

A module as used herein refers to any combination of hardware, software, and/or firmware. As an example, a module includes hardware, such as a micro-controller, associated with a non-transitory medium to store code adapted to be executed by the micro-controller. Therefore, reference to a module, in one embodiment, refers to the hardware, which is specifically configured to recognize and/or execute the code to be held on a non-transitory medium. Furthermore, in another embodiment, use of a module refers to the non-transitory medium including the code, which is specifically adapted to be executed by the microcontroller to perform predetermined operations. And as may be inferred, in yet another embodiment, the term module (in this example) may refer to the combination of the microcontroller and the non-transitory medium. Often module boundaries that are illustrated as separate commonly vary and potentially overlap. For example, a first and a second module may share hardware, software, firmware, or a combination thereof, while potentially retaining some independent hardware, software, or firmware. In one embodiment, use of the term logic includes hardware, such as transistors, registers, or other hardware, such as programmable logic devices.

Use of the phrase `configured to,' in one embodiment, refers to arranging, putting together, manufacturing, offering to sell, importing and/or designing an apparatus, hardware, logic, or element to perform a designated or determined task. In this example, an apparatus or element thereof that is not operating is still `configured to' perform a designated task if it is designed, coupled, and/or interconnected to perform said designated task. As a purely illustrative example, a logic gate may provide a 0 or a 1 during operation. But a logic gate `configured to' provide an enable signal to a clock does not include every potential logic gate that may provide a 1 or 0. Instead, the logic gate is one coupled in some manner that during operation the 1 or 0 output is to enable the clock. Note once again that use of the term `configured to' does not require operation, but instead focus on the latent state of an apparatus, hardware, and/or element, where in the latent state the apparatus, hardware, and/or element is designed to perform a particular task when the apparatus, hardware, and/or element is operating.

Furthermore, use of the phrases 'to,' `capable of/to,' and or `operable to,' in one embodiment, refers to some apparatus, logic, hardware, and/or element designed in such a way to enable use of the apparatus, logic, hardware, and/or element in a specified manner. Note as above that use of to, capable to, or operable to, in one embodiment, refers to the latent state of an apparatus, logic, hardware, and/or element, where the apparatus, logic, hardware, and/or element is not operating but is designed in such a manner to enable use of an apparatus in a specified manner.

A value, as used herein, includes any known representation of a number, a state, a logical state, or a binary logical state. Often, the use of logic levels, logic values, or logical values is also referred to as 1's and 0's, which simply represents binary logic states. For example, a 1 refers to a high logic level and 0 refers to a low logic level. In one embodiment, a storage cell, such as a transistor or flash cell, may be capable of holding a single logical value or multiple logical values. However, other representations of values in computer systems have been used. For example the decimal number ten may also be represented as a binary value of 1010 and a hexadecimal letter A. Therefore, a value includes any representation of information capable of being held in a computer system.

Moreover, states may be represented by values or portions of values. As an example, a first value, such as a logical one, may represent a default or initial state, while a second value, such as a logical zero, may represent a non-default state. In addition, the terms reset and set, in one embodiment, refer to a default and an updated value or state, respectively. For example, a default value potentially includes a high logical value, i.e. reset, while an updated value potentially includes a low logical value, i.e. set. Note that any combination of values may be utilized to represent any number of states.

The embodiments of methods, hardware, software, firmware or code set forth above may be implemented via instructions or code stored on a machine-accessible, machine readable, computer accessible, or computer readable medium which are executable by a processing element. A non-transitory machine-accessible/readable medium includes any mechanism that provides (i.e., stores and/or transmits) information in a form readable by a machine, such as a computer or electronic system. For example, a non-transitory machine-accessible medium includes random-access memory (RAM), such as static RAM (SRAM) or dynamic RAM (DRAM); ROM; magnetic or optical storage medium; flash memory devices; electrical storage devices; optical storage devices; acoustical storage devices; other form of storage devices for holding information received from transitory (propagated) signals (e.g., carrier waves, infrared signals, digital signals); etc., which are to be distinguished from the non-transitory mediums that may receive information there from.

Instructions used to program logic to perform embodiments of the invention may be stored within a memory in the system, such as DRAM, cache, flash memory, or other storage. Furthermore, the instructions may be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer)

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In the foregoing specification, a detailed description has been given with reference to specific exemplary embodiments. It will, however, be evident that various modifications and changes may be made thereto without departing from the broader spirit and scope of the disclosure as set forth in the appended claims. The specification and drawings are, accordingly, to be regarded in an illustrative sense rather than a restrictive sense. Furthermore, the foregoing use of embodiment and other exemplarily language does not necessarily refer to the same embodiment or the same example, but may refer to different and distinct embodiments, as well as potentially the same embodiment.

Some portions of the detailed description are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here and generally, conceived to be a self-consistent sequence of operations leading to a desired result. The operations are those requiring physical manipulations of physical quantities. Usually, though not necessarily, these quantities take the form of electrical or magnetic signals capable of being stored, transferred, combined, compared and otherwise manipulated. It has proven convenient at times, principally for reasons of common usage, to refer to these signals as bits, values, elements, symbols, characters, terms, numbers or the like. The blocks described herein may be hardware, software, firmware or a combination thereof.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as "defining," "determining," "issuing," "linking," "associating," "obtaining," "authenticating," "prohibiting," "executing," "requesting," "communicating," "setting," "receiving," "generating," "transmitting," "changing," "putting," "detecting," "self-resetting," "resetting," "establishing," "performing," "outputting," or the like, refer to the actions and processes of a computing system, or similar electronic computing device, that manipulates and transforms data represented as physical (e.g., electronic) quantities within the computing system's registers and memories into other data similarly represented as physical quantities within the computing system memories or registers or other such information storage, transmission or display devices.

The words "example" or "exemplary" are used herein to mean serving as an example, instance or illustration. Any aspect or design described herein as "example' or "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or." That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an embodiment" or "one embodiment" or "an implementation" or "one implementation" throughout is not intended to mean the same embodiment or implementation unless described as such. Also, the terms "first," "second," "third," "fourth," etc. as used herein are meant as labels to distinguish among different elements and may not necessarily have an ordinal meaning according to their numerical designation.

## Claims

1. A virtual machine migration method comprising:
receiving (302), by a migration manager (140) from a first host system (120a) via a first secure communication channel (215a), a cryptographic data item (220) utilized to derive a cryptographic key employed by a first memory controller (130a) associated with the first host system (120a or 120b) for implementing a first cryptographically protected execution environment for storing memory pages (230) associated with a virtual machine (128a);
transmitting (304) the cryptographic data item (220) to a second host system (120b or 120a) via a second secure communication channel (215b) for implementing a second cryptographically protected execution environment on the second host system (120b) for storing memory pages (230) associated with the virtual machine (128a);
causing (306) the first host system (120a) to migrate the memory pages (230) of the virtual machine (128a) via an unsecured communication channel (210) to the second host system (120b) for storing in the second cryptographically protected execution environment;
transmit (406), by the migration manager (140), a notification to the first memory controller (130a) associated with the first host system (120a), the notification to cause the first memory controller (130a) to prevent decrypting of the memory pages (230) associated with the virtual machine (128) during migration and transmit (414), by the migration manager (140), a notification to a second memory controller (130b) associated with the second host system (120b), the notification to cause the second memory controller (130b) to prevent encrypting of the received/migrated memory pages (230) associated with the virtual machine (128a) when storing them in the second cryptographically protected execution environment.

2. The virtual machine migration method of claim 1, wherein receiving (302) the cryptographic data item (220) further comprises:
receiving (408), from the first host system (120a), the cryptographic data item (220) and a cryptographic hash; and
upon receipt of the cryptographic data item (220) and the cryptographic hash, validating (410) the cryptographic data item (220) using the cryptographic hash.

3. The virtual machine migration method of any one of claims 1-2, further comprising:
receiving (402), from the first host system (120a), a request to migrate the virtual machine (128a) to the second host system (120b); and
causing the virtual machine (128a) to be placed in the first cryptographically protected execution environment.

4. The virtual machine migration method of any one of claims 1-3, wherein the cryptographic data item (220) comprises physical address information of the memory pages (230) associated with the virtual machine (128a).

5. The virtual machine migration method of claim 4, wherein the physical address information comprises a key identifier associated with the cryptographic key.

6. The virtual machine migration method of any one of claims 1-5, wherein the second memory controller (130b) of the second host system (120b) is to encrypt and decrypt the memory pages (230) associated with the virtual machine (128a) with a second cryptographic key.

7. A virtual machine migration system (200) comprising:
a first host system (120a) ;
a second host system (120b); and
a migration manager (140), said migration manager (140) comprising a memory; and
a processing device, operatively coupled to the memory, to:
receive, from a first host system (120a) via a first secure communication channel (215a), a cryptographic data item (220) utilized to derive a cryptographic key employed by a first memory controller (130a) associated with the first host system (120a) for implementing a first cryptographically protected execution environment for storing memory pages (230) associated with a virtual machine (128a);
transmit the cryptographic data item (220) to a second host system (120b) via a second secure communication channel (215b) for implementing a second cryptographically protected execution environment on the second host system (120b) for storing memory pages (230) associated with the virtual machine (128);
cause the first host system (120a) to migrate the memory pages (230) of the virtual machine (128a) via an unsecured communication channel (210) to the second host system (120b) for storing in the second cryptographically protected execution environment;
transmit (406), by the migration manager (140), a notification to the first memory controller (130a) associated with the first host system (120a), the notification to cause the first memory controller (130a) to prevent decrypting of the memory pages (230) associated with the virtual machine (128) during migration and transmit (414), by the migration manager (140), a notification to a second memory controller (130b) associated with the second host system (120b), the notification to cause the second memory controller (130b) to prevent encrypting of the received/migrated memory pages (230) associated with the virtual machine (128a) when storing them in the second cryptographically protected execution environment.

8. The virtual machine migration system (200) of claim 7, wherein to receive the cryptographic data item (220), the processing device is further to:
receive, from the first host system (120a), the cryptographic data item (220) and a cryptographic hash, wherein the cryptographic data item (220) is encrypted; and
upon receipt of the cryptographic data item (220) and the cryptographic hash, validating the cryptographic data item (220) using the cryptographic hash.

9. The virtual machine migration system (200) of any one of claims 7-8, wherein the processing device is further to:
receive, from the first host system (120a), a request to migrate the virtual machine (128a) to the second host system (120b); and
cause the virtual machine (128) to be placed in the first cryptographically protected execution environment.

10. The virtual machine migration system (200) of any one of claims 7-9, wherein the cryptographic data item (220) comprises physical address information of the memory pages (230) associated with the virtual machine (128a).

11. The virtual machine migration system (200) of claim 10, wherein the physical address information comprises a key identifier associated with the cryptographic key.

12. The virtual machine migration system (200) of any one of claims 7-11, wherein the second memory controller (130b) of the second host system (120b ) is to encrypt and decrypt the memory pages (230) associated with the virtual machine (128a) with a second cryptographic key.

## Patentansprüche

1. Verfahren zur Migration einer virtuellen Maschine, umfassend:
Empfangen (302) eines kryptografischen Datenelements (220), das zum Ableiten eines kryptografischen Schlüssels verwendet wird, der von einer ersten Speichersteuerung (130a), die mit einem ersten Hostsystem (120a oder 120b) assoziiert ist, zum Implementieren einer ersten kryptografisch geschützten Ausführungsumgebung zum Speichern von Speicherseiten (230) eingesetzt wird, die mit einer virtuellen Maschine (128a) assoziiert sind, durch einen Migrationsmanager (140) von dem ersten Hostsystem (120a) über einen ersten sicheren Kommunikationskanal (215a);
Senden (304) des kryptografischen Datenelements (220) über einen zweiten sicheren Kommunikationskanal (215b) an ein zweites Hostsystem (120b oder 120a) zum Implementieren einer zweiten kryptografisch geschützten Ausführungsumgebung auf dem zweiten Hostsystem (120b) zum Speichern von Speicherseiten (230), die mit der virtuellen Maschine (128a) assoziiert sind;
Veranlassen (306) des ersten Hostsystems (120a) zum Migrieren der Speicherseiten (230) der virtuellen Maschine (128a) über einen ungesicherten Kommunikationskanal (210) zum zweiten Hostsystem (120b) zur Speicherung in der zweiten kryptografisch geschützten Ausführungsumgebung;
Senden (406) einer Benachrichtigung durch den Migrationsmanager (140) an die erste Speichersteuerung (130a), die mit dem ersten Hostsystem (120a) assoziiert ist, wobei die Benachrichtigung die erste Speichersteuerung (130a) zum Verhindern von Entschlüsselung der mit der virtuellen Maschine (128) assoziierten Speicherseiten (230) während der Migration veranlasst, und
Senden (414) einer Benachrichtigung durch den Migrationsmanager (140) an eine zweite Speichersteuerung (130b), die mit dem zweiten Hostsystem (120b) assoziiert ist, wobei die Benachrichtigung die zweite Speichersteuerung (130b) zum Verhindern von Entschlüsselung der mit der virtuellen Maschine (128a) assoziierten empfangenen/migrierten Speicherseiten (230) beim Speichern derselben in der zweiten kryptografisch geschützten Ausführungsumgebung veranlasst.

2. Verfahren zur Migration einer virtuellen Maschine nach Anspruch 1, wobei das Empfangen (302) des kryptografischen Datenelements (220) ferner umfasst:
Empfangen (408) des kryptografischen Datenelements (220) und eines kryptografischen Hashs vom ersten Hostsystem (120a); und
Validieren (410) des kryptografischen Datenelements (220) unter Verwendung des kryptografischen Hashs bei Empfang des kryptografischen Datenelements (220) und des kryptografischen Hashs.

3. Verfahren zur Migration einer virtuellen Maschine nach einem der Ansprüche 1 bis 2, ferner umfassend:
Empfangen (402) einer Anforderung vom ersten Hostsystem (120a) zum Migrieren der virtuellen Maschine (128a) zum zweiten Hostsystem (120b); und
Veranlassen, dass die virtuelle Maschine (128a) in der ersten kryptografisch geschützten Ausführungsumgebung platziert wird.

4. Verfahren zur Migration einer virtuellen Maschine nach einem der Ansprüche 1 bis 3, wobei das kryptografische Datenelement (220) Informationen hinsichtlich physischer Adressen der mit der virtuellen Maschine (128a) assoziierten Speicherseiten (230) umfasst.

5. Verfahren zur Migration einer virtuellen Maschine nach Anspruch 4, wobei die Informationen hinsichtlich physischer Adressen eine mit dem kryptografischen Schlüssel assoziierte Schlüsselkennung umfassen.

6. Verfahren zur Migration einer virtuellen Maschine nach einem der Ansprüche 1 bis 5, wobei die zweite Speichersteuerung (130b) des zweiten Hostsystems (120b) die mit der virtuellen Maschine (128a) assoziierten Speicherseiten (230) mit einem zweiten kryptografischen Schlüssel verschlüsselt und entschlüsselt.

7. System (200) zur Migration einer virtuellen Maschine, umfassend:
ein erstes Hostsystem (120a);
ein zweites Hostsystem (120b); and
einen Migrationsmanager (140), wobei der Migrationsmanager (140) umfasst:
einen Speicher; und
eine Verarbeitungsvorrichtung, die funktionell mit dem Speicher gekoppelt ist, zum:
Empfangen eines kryptografischen Datenelements (220), das zum Ableiten eines kryptografischen Schlüssels verwendet wird, der von einer ersten Speichersteuerung (130a), die mit einem ersten Hostsystem (120a) assoziiert ist, zum Implementieren einer ersten kryptografisch geschützten Ausführungsumgebung zum Speichern von Speicherseiten (230) eingesetzt wird, die mit einer virtuellen Maschine (128a) assoziiert sind, von dem ersten Hostsystem (120a) über einen ersten sicheren Kommunikationskanal (215a);
Senden des kryptografischen Datenelements (220) über einen zweiten sicheren Kommunikationskanal (215b) an ein zweites Hostsystem (120b 120a) zum Implementieren einer zweiten kryptografisch geschützten Ausführungsumgebung auf dem zweiten Hostsystem (120b) zum Speichern von Speicherseiten (230), die mit der virtuellen Maschine (128) assoziiert sind;
Veranlassen des ersten Hostsystems (120a) zum Migrieren der Speicherseiten (230) der virtuellen Maschine (128a) über einen ungesicherten Kommunikationskanal (210) zum zweiten Hostsystem (120b) zur Speicherung in der zweiten kryptografisch geschützten Ausführungsumgebung;
Senden (406) einer Benachrichtigung durch den Migrationsmanager (140) an die erste Speichersteuerung (130a), die mit dem ersten Hostsystem (120a) assoziiert ist, wobei die Benachrichtigung die erste Speichersteuerung (130a) zum Verhindern von Entschlüsselung der mit der virtuellen Maschine (128) assoziierten Speicherseiten (230) während der Migration veranlasst, und
Senden (414) einer Benachrichtigung durch den Migrationsmanager (140) an eine zweite Speichersteuerung (130b), die mit dem zweiten Hostsystem (120b) assoziiert ist, wobei die Benachrichtigung die zweite Speichersteuerung (130b) zum Verhindern von Entschlüsselung der mit der virtuellen Maschine (128a) assoziierten empfangenen/migrierten Speicherseiten (230) beim Speichern derselben in der zweiten kryptografisch geschützten Ausführungsumgebung veranlasst.

8. System (200) zur Migration einer virtuellen Maschine nach Anspruch 7, wobei die Verarbeitungsvorrichtung, um das kryptografische Datenelement (220) zu empfangen, ferner ist zum:
Empfangen des kryptografischen Datenelements (220) und eines kryptografischen Hashs vom ersten Hostsystem (120a), wobei das kryptografische Datenelement (220) verschlüsselt ist; und
Validieren des kryptografischen Datenelements (220) unter Verwendung des kryptografischen Hashs bei Empfang des kryptografischen Datenelements (220) und des kryptografischen Hashs.

9. System (200) zur Migration einer virtuellen Maschine nach einem der Ansprüche 7 bis 8, wobei die Verarbeitungsvorrichtung ferner ist zum:
Empfangen einer Anforderung vom ersten Hostsystem (120a) zum Migrieren der virtuellen Maschine (128a) zum zweiten Hostsystem (120b); und
Veranlassen, dass die virtuelle Maschine (128) in der ersten kryptografisch geschützten Ausführungsumgebung platziert wird.

10. System (200) zur Migration einer virtuellen Maschine nach einem der Ansprüche 7 bis 9, wobei das kryptografische Datenelement (220) Informationen hinsichtlich physischer Adressen der mit der virtuellen Maschine (128a) assoziierten Speicherseiten (230) umfasst.

11. System (200) zur Migration einer virtuellen Maschine nach Anspruch 10, wobei die Informationen hinsichtlich physischer Adressen eine mit dem kryptografischen Schlüssel assoziierte Schlüsselkennung umfassen.

12. System (200) zur Migration einer virtuellen Maschine nach einem der Ansprüche 7 bis 11, wobei die zweite Speichersteuerung (130b) des zweiten Hostsystems (120b) die mit der virtuellen Maschine (128a) assoziierten Speicherseiten (230) mit einem zweiten kryptografischen Schlüssel verschlüsselt und entschlüsselt.

## Revendications

1. Procédé de migration de machine virtuelle comportant :
la réception (302), par un gestionnaire (140) de migration en provenance d'un premier système hôte (120a) via un premier canal (215a) de communication sécurisé, d'un élément (220) de données cryptographiques utilisé pour élaborer une clé cryptographique employée par un premier contrôleur (130a) de mémoire associé au premier système hôte (120a ou 120b) pour mettre en oeuvre un premier environnement d'exécution protégé cryptographiquement servant à stocker des pages (230) de mémoire associées à une machine virtuelle (128a) ;
la transmission (304) de l'élément (220) de données cryptographiques à un second système hôte (120b ou 120a) via un second canal (215b) de communication sécurisé pour mettre en oeuvre un second environnement d'exécution protégé cryptographiquement sur le second système hôte (120b) servant à stocker des pages (230) de mémoire associées à la machine virtuelle (128a) ;
le fait d'amener (306) le premier système hôte (120a) à faire migrer les pages (230) de mémoire de la machine virtuelle (128a) via un canal (210) de communication non sécurisé vers le second système hôte (120b) en vue d'un stockage dans le second environnement d'exécution protégé cryptographiquement ;
la transmission (406), par le gestionnaire (140) de migration, d'une notification au premier contrôleur (130a) de mémoire associé au premier système hôte (120a), la notification servant à amener le premier contrôleur (130a) de mémoire à empêcher le déchiffrement des pages (230) de mémoire associées à la machine virtuelle (128) pendant la migration et
la transmission (414), par le gestionnaire (140) de migration, d'une notification à un second contrôleur (130b) de mémoire associé au second système hôte (120b), la notification servant à amener le second contrôleur (130b) de mémoire à empêcher le chiffrement des pages (230) de mémoire reçues/migrées associées à la machine virtuelle (128a) lors de leur stockage dans le second environnement d'exécution protégé cryptographiquement.

2. Procédé de migration de machine virtuelle selon la revendication 1, la réception (302) de l'élément (220) de données cryptographiques comportant en outre :
la réception (408), en provenance du premier système hôte (120a), de l'élément (220) de données cryptographiques et d'un hachage cryptographique ; et
à réception de l'élément (220) de données cryptographiques et du hachage cryptographique, la validation (410) de l'élément (220) de données cryptographiques à l'aide du hachage cryptographique.

3. Procédé de migration de machine virtuelle selon l'une quelconque des revendications 1 à 2, comportant en outre :
la réception (402), en provenance du premier système hôte (120a), d'une demande de migration de la machine virtuelle (128a) vers le second système hôte (120b) ; et
le fait d'amener la machine virtuelle (128a) à être placée dans le premier environnement d'exécution protégé cryptographiquement.

4. Procédé de migration de machine virtuelle selon l'une quelconque des revendications 1 à 3, l'élément (220) de données cryptographiques comportant des informations d'adresse physique des pages (230) de mémoire associées à la machine virtuelle (128a).

5. Procédé de migration de machine virtuelle selon la revendication 4, les informations d'adresse physique comportant un identifiant de clé associé à la clé cryptographique.

6. Procédé de migration de machine virtuelle selon l'une quelconque des revendications 1 à 5, le second contrôleur (130b) de mémoire du second système hôte (120b) étant destiné à chiffrer et à déchiffrer les pages (230) de mémoire associées à la machine virtuelle (128a) avec une seconde clé cryptographique.

7. Système (200) de migration de machine virtuelle comportant :
un premier système hôte (120a) ;
un second système hôte (120b) ; et
un gestionnaire (140) de migration, ledit gestionnaire (140) de migration comportant
une mémoire ; et
un dispositif de traitement, couplé fonctionnellement à la mémoire, destiné à :
recevoir, en provenance d'un premier système hôte (120a) via un premier canal (215a) de communication sécurisé,
un élément (220) de données cryptographiques utilisé pour élaborer une clé cryptographique employée par un premier contrôleur (130a) de mémoire associé au premier système hôte (120a) pour mettre en oeuvre un premier environnement d'exécution protégé cryptographiquement servant à stocker des pages (230) de mémoire associées à une machine virtuelle (128a) ;
transmettre l'élément (220) de données cryptographiques à un second système hôte (120b) via un second canal (215b) de communication sécurisé pour mettre en oeuvre un second environnement d'exécution protégé cryptographiquement sur le second système hôte (120b) servant à stocker des pages (230) de mémoire associées à la machine virtuelle (128) ;
amener le premier système hôte (120a) à faire migrer les pages (230) de mémoire de la machine virtuelle (128a) via un canal (210) de communication non sécurisé vers le second système hôte (120b) en vue d'un stockage dans le second environnement d'exécution protégé cryptographiquement ;
faire transmettre (406), par le gestionnaire (140) de migration, une notification au premier contrôleur (130a) de mémoire associé au premier système hôte (120a), la notification servant à amener le premier contrôleur (130a) de mémoire à empêcher le déchiffrement des pages (230) de mémoire associées à la machine virtuelle (128) pendant la migration et
faire transmettre (414), par le gestionnaire (140) de migration, une notification à un second contrôleur (130b) de mémoire associé au second système hôte (120b), la notification servant à amener le second contrôleur (130b) de mémoire à empêcher le chiffrement des pages (230) de mémoire reçues/migrées associées à la machine virtuelle (128a) lors de leur stockage dans le second environnement d'exécution protégé cryptographiquement.

8. Système (200) de migration de machine virtuelle selon la revendication 7, le dispositif de traitement étant en outre destiné, pour recevoir l'élément (220) de données cryptographiques, à :
recevoir, en provenance du premier système hôte (120a), l'élément (220) de données cryptographiques et un hachage cryptographique, l'élément (220) de données cryptographiques étant chiffré ; et
à réception de l'élément (220) de données cryptographiques et du hachage cryptographique, valider l'élément (220) de données cryptographiques à l'aide du hachage cryptographique.

9. Système (200) de migration de machine virtuelle selon l'une quelconque des revendications 7 à 8, le dispositif de traitement étant en outre destiné à :
recevoir, en provenance du premier système hôte (120a), une demande de migration de la machine virtuelle (128a) vers le second système hôte (120b) ; et
amener la machine virtuelle (128) à être placée dans le premier environnement d'exécution protégé cryptographiquement.

10. Système (200) de migration de machine virtuelle selon l'une quelconque des revendications 7 à 9, l'élément (220) de données cryptographiques comportant des informations d'adresse physique des pages (230) de mémoire associées à la machine virtuelle (128a).

11. Système (200) de migration de machine virtuelle selon la revendication 10, les informations d'adresse physique comportant un identifiant de clé associé à la clé cryptographique.

12. Système (200) de migration de machine virtuelle selon l'une quelconque des revendications 7 à 11, le second contrôleur (130b) de mémoire du second système hôte (120b) étant destiné à chiffrer et à déchiffrer les pages (230) de mémoire associées à la machine virtuelle (128a) avec une seconde clé cryptographique.
